# DEMANDE DE BREVET EUROPEEN

(11) **EP 0 613 763 A1**
(43) Date de publication de la demande: **07.09.1994**
(21) Numéro de dépôt: 94400429.0
(22) Date de dépôt: 01.03.1994
(51) Int. Cl.: B25J 15/00, G21F 7/06, H01R 13/629

(54) **Dispositif pour connecter/déconnecter par télémanipulation une fiche de connecteur et son embase**

(30) Priorité: 03.03.1993 FR 9302447
(71) Demandeur: COMMISSARIAT A L'ENERGIE ATOMIQUE, F-75015 Paris Cédex 15 (FR)
(72) Inventeur: Chevallereau, Roger, F-84500 Bollene (FR); Galmard, Yves, F-84100 Orange (FR)
(74) Mandataire: Dubois-Chabert, Guy

(57) **Abrégé**

L'invention propose un dispositif permettant de saisir une fiche de connecteur, de lui faire subir, par actionnement d'un levier, une translation assurant son introduction dans son embase.

Ce dispositif comporte en outre des moyens d'accrochage (18, 24) pour saisir la fiche du connecteur, des moyens de translation (16, 20, 22) pour mouvoir la fiche de connecteur maintenue par les moyens d'accrochage, et des moyens de guidage (14) pour diriger le mouvement de la fiche du connecteur vers/hors de l'embase.

Application aux cellules dites "chaudes" dans le domaine nucléaire.

## Description

### Domaine technique

L'invention concerne un dispositif pour connecter et/ou déconnecter par télémanipulation une fiche de connecteur sur/hors de son embase.

Elle trouve de nombreuses applications dans les domaines où des connexions et déconnexions doivent être effectuées dans un milieu hostile. De façon plus particulière, l'invention trouve une application dans le domaine nucléaire.

### Etat de la technique

Les connecteurs généralement utilisés en télémanipulation en cellules dites "chaudes" (c'est-à-dire en cellules blindées des milieux hostiles) sont des connecteurs de type cylindrique à verrouillage axial. Pour résister aux conditions particulières de ces cellules chaudes (haute température, radiations,...), les connecteurs sont durcis lors de leur fabrication ; ils sont donc très massifs. De plus, ces connecteurs sont équipés chacun d'un détrompeur mécanique qui ne permet l'introduction de la fiche dans son embase que pour une seule position de la fiche par rapport à son embase. Le verrouillage de la fiche dans son embase est effectué automatiquement en fin d'introduction de la fiche dans l'embase.

La plupart des télémanipulateurs utilisés actuellement dans de telles cellules chaudes n'assurent pas une précision suffisante pour permettre à l'opérateur d'introduire la fiche parfaitement dans l'axe de l'embase (détrompeur correctement orienté).

Aussi, du fait du caractère massif des connecteurs et du manque de précision des télémanipulateurs, l'opérateur doit exercer un effort certain sur le bras du télémanipulateur pour introduire la fiche dans l'embase.

En outre, le travail de l'opérateur est encore plus difficile lorsque les embases dans lesquelles les fiches doivent être connectées sont situées dans des endroits qui ne sont pas dans le champ de vision de l'opérateur ; celui-ci doit alors utiliser une caméra ou un miroir pour visualiser l'embase dans la cellule chaude.

Le document FR-A-2 642 696 décrit un outil de préhension d'une pièce par télémanipulation. Cet outil assure un maintien rigide des connecteurs de petite taille. Il transforme, de plus, les mouvements radiaux en mouvements axiaux pour permettre un travail dans l'axe du télémanipulateur. Aussi, l'outil décrit dans ce document ne remédie pas au problème posé par des embases placées dans des endroits hors champ de vision.

Le document FR-A-2678 440 décrit un dispositif pour mettre en place et verrouiller, par télémanipulateur, une fiche de connecteur sur son embase. Ce dispositif ne permet pas de connecter horizontalement une fiche sur son embase. En outre, il ne permet pas non plus de remédier au problème exposé ci-dessus concernant les embases placées en des zones hors champ de vision.

### Exposé de l'invention

La présente invention a justement pour but de remédier aux inconvénients énoncés précédemment. A cette fin, l'invention propose un dispositif permettant de saisir une fiche de connecteur, de lui faire subir, par actionnement d'un levier, une translation assurant son introduction dans son embase.

De façon plus précise, l'invention concerne un dispositif pour connecter et déconnecter, par télémanipulation, une fiche de connecteur et son embase. Ce dispositif est caractérisé en ce qu'il comporte des moyens d'accrochage pour saisir la fiche du connecteur, des moyens de translation pour mouvoir la fiche de connecteur maintenue par les moyens d'accrochage, et des moyens de guidage pour diriger le mouvement de la fiche du connecteur respectivement vers et hors de l'embase.

Avantageusement, ce dispositif comporte un bâti apte à supporter les moyens d'accrochage ainsi que les moyens de translation et comprenant une plaque avant et une plaque arrière parallèles l'une à l'autre et reliées par les moyens de guidage.

Les moyens de guidage comportent une paire de tiges de guidage fixées, parallèlement l'une à l'autre, d'une part sur la plaque avant du bâti et d'autre part sur la plaque arrière du bâti.

Les moyens d'accrochage comportent des premiers moyens de pince pour accrocher la fiche de connecteur et la maintenir dans une position fixe, et des seconds moyens de pince pour libérer ladite fiche de connecteur des premiers moyens de pince.

Les moyens de translation comportent une paire de moyens coulissants (ou coulisseaux) positionnés chacun autour d'une tige de guidage et aptes à coulisser sur lesdites tiges de guidage

Selon une variante, les moyens de pince comportent deux plaques mobiles dont les extrémités inférieures sont incurvées l'une vers l'autre pour soutenir la fiche de connecteur et dont les extrémités supérieures sont reliées par un moyen de ressort apte à tenir écartées les extrémités supérieures des plaques mobiles pour rapprocher les extrémités incurvées des plaques mobiles.

Ces premiers moyens de pince peuvent comporter, sur chacune des plaques mobiles, un moyen de maintien (appelé aussi griffe) apte à maintenir lesdits premiers moyens de pince en appui sur les moyens coulissants et à permettre un mouvement de rotation des plaques mobiles autour desdits moyens coulissants.

Selon un mode de réalisation de l'invention, les moyens de translation comportent des moyens d'entretoise disposés en partie autour des premiers moyens de pince, ces moyens d'entretoise étant solidaires des moyens coulissants.

Ces moyens de translation peuvent comporter de plus un ensemble de biellettes et un système de levier (ou simplement levier) qui comprend un bras de levier fixé à l'une des biellettes, une autre biellette de cet ensemble étant fixée aux moyens d'entretoise. Ce système de levier présente l'avantage de démultiplier l'effort exercé par l'opérateur sur ledit levier pour modifier la position des moyens d'accrochage. L'opérateur peut ainsi connecter (ou déconnecter) la fiche et l'embase sans gros effort physique.

De façon avantageuse, la plaque avant du bâti comprend une ouverture apte à s'emboîter dans les saignées de l'embase pour assurer un positionnement fixe des moyens d'accrochage par rapport à l'embase. Ceci a pour avantage de permettre à l'opérateur de maintenir l'auxiliaire de connexion dans une position relativement fixe par rapport à l'embase. Il en résulte une connexion (ou déconnexion) de la fiche et de l'embase relativement facile même lorsque le connecteur est difficilement visible par l'opérateur.

De façon plus précise, les seconds moyens de pince (ou hotte de préhension active), installés à proximité de la plaque avant du bâti, comportent une armature centrale en forme de T, une paire de lames de serrage situées de part et d'autre de l'armature centrale et une paire de moyens de ressort (notamment des lames de ressort) disposés chacun entre ladite armature centrale et l'une des lames de serrage.

Ces lames de serrage comportent un moyen d'appui (nommé aussi talon) apte à appuyer sur les extrémités supérieures des plaques mobiles des premiers moyens de pince pour permettre l'écartement des extrémités incurvées des plaques mobiles de ces premiers moyens de pince.

Avantageusement, la plaque arrière du bâti comporte une ouverture apte à recevoir un câble électrique dont l'extrémité est introduite dans la fiche de connecteur.

L'invention, telle qu'exposée ci-dessus, présente ainsi l'avantage de limiter les risques de déformation de la fiche à connecter puisque le mouvement effectué sur la fiche pour l'introduire dans l'embase est réalisé dans l'axe de l'embase; il n'y a plus de risques de mouvements "haut-bas" ou "droite-gauche" de l'opérateur sur le télémanipulateur maintenant la fiche hors de la pénétration de la fiche dans l'embase.

De plus, le dispositif selon l'invention s'adapte aux différentes tailles de connecteurs télémanipulables.

### Brève description des dessins

- la figure 1 représente une cellule blindée comportant des télémanipulateurs pour connecter des fiches de connecteurs sur leur embase respective ;
   la figure 2 présente une vue en perspective du dispositif selon l'invention ;
- les figures 3A et 3B représentent, respectivement, une vue de profil et une vue de dessus du dispositif dans sa position de saisie de la fiche de connecteur ; et
- les figures 4A et 4B représentent, respectivement, une vue de profil et une vue de face du dispositif dans une position d'introduction de la fiche dans l'embase.

### Exposé détaillé du mode de réalisation

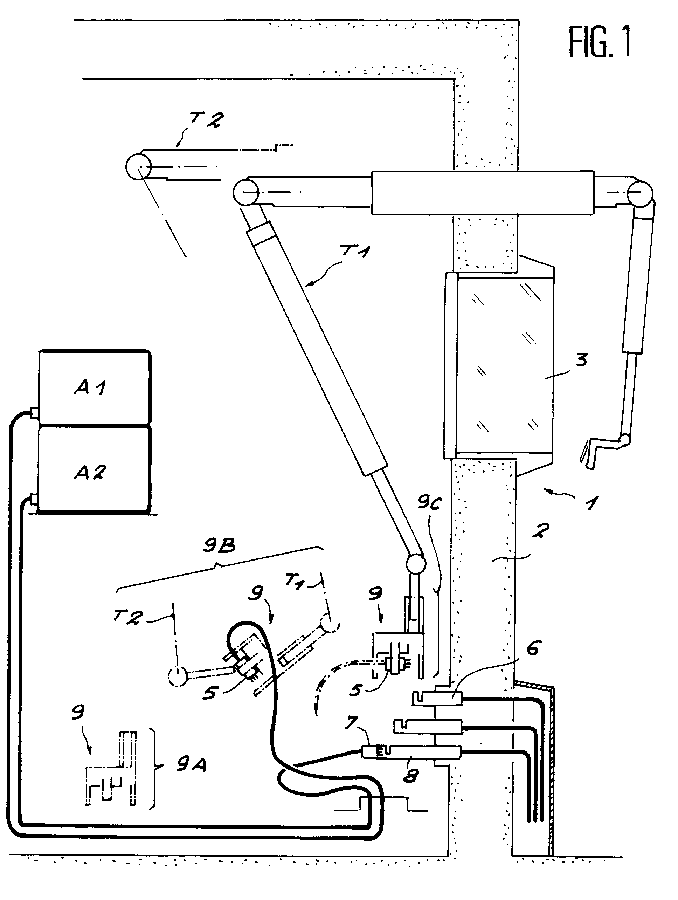

Sur la figure 1, on a représenté une cellule blindée d'un type semblable à celui utilisé dans les milieux hostiles. Cette cellule est référencée 1. Elle comporte, sur l'une de ses parois (référencée 2), un hublot 3 à travers lequel l'opérateur peut observer l'intérieur de la cellule 1. Dans cette même paroi 2 de la cellule 1, des ouvertures assurent le passage de télémanipulateurs. Selon le mode de réalisation décrit, deux télémanipulateurs, référencés T1 et T2 sont utilisés ; ils traversent la cellule en deux ouvertures distinctes.

Sur cette figure 1, on a également représenté les appareils électriques A1 et A2 reliés par un fil électrique aux fiches de connecteur respectives 5 et 7. Des embases de connecteurs, notamment les embases 6 et 8, sont fixées dans la paroi 2 de la cellule 1. L'alimentation électrique de ces embases se fait à l'extérieur de la cellule 1 par une source d'alimentation extérieure, non représentée sur la figure.

Sur cette figure 1, on a représenté la fiche 7 déjà connectée à l'embase 8. L'appareil A2 peut ainsi être alimenté par la source extérieure 1 via le connecteur comprenant la prise 7 et l'embase 8.

Au contraire, la fiche 5 a été représentée en cours de mise en place dans l'embase 6. De façon plus précise, cette fiche 5 a été représentée lorsqu'elle est introduite dans le dispositif selon l'invention (référencé 9) . Ce dispositif 9, appelé également auxiliaire de connexion, a été représenté, sur cette figure, en traits mixtes. Une première représentation montre cet auxiliaire de connexion 9 dans une position de repos 9A, lorsque le dit auxiliaire de connexion est stocké dans la cellule. La position 9B montre cet auxiliaire de connexion 9 lorsqu'il saisit la fiche 5. Dans cette position 9B, on a représenté la partie extrême du télémanipulateur T2 (représenté en traits mixtes) en train d'introduire la fiche 5 à l'intérieur des premiers moyens de pince de l'auxiliaire de connexion 9. On a représenté également dans cette position 9B, la partie extrême du manipulateur T1, en train de maintenir l'auxiliaire de connexion 9 dans la position adéquate pour y recevoir la fiche 5.

La position 9C montre l'auxiliaire de connexion 9 lorsqu'il est prêt à être introduit dans les saignées de l'embase 6. Lorsque l'auxiliaire de connexion 9 est emboîté sur l'embase 6, la fiche 5 peut être introduite dans l'embase 6.

Ces différentes positions, 9A, 9B, 9C de l'auxiliaire de connexion 9 seront décrites de façon plus détaillée dans la suite de la description.

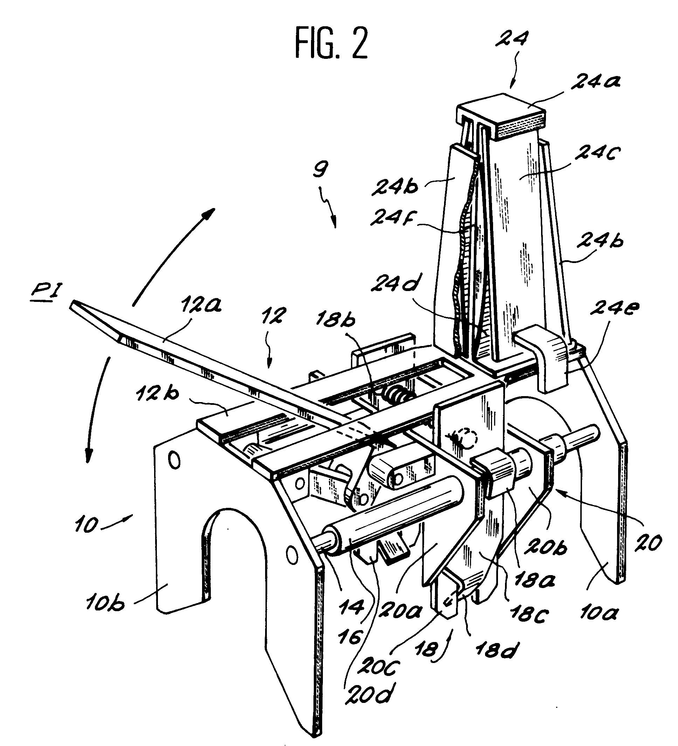

La figure 2 représente une vue en perspective de l'auxiliaire de connexion selon l'invention. Sur cette figure, seuls les éléments visibles sur le profil ont été référencés. L'auxiliaire de connexion selon l'invention étant parfaitement symétrique, ces références suffisent à la compréhension de l'invention.

L'auxiliaire de connexion 9 comporte un bâti 10, des moyens d'accrochage 18 et 24 qui permettent de saisir puis de relâcher la fiche du connecteur, des moyens de translation 16, 20, 12 qui permettent de mouvoir la fiche du connecteur maintenue par les moyens d'accrochage, et des moyens de guidage 14 qui permettent de diriger les mouvements de la fiche du connecteur vers ou hors de l'embase.

Le bâti 10 de l'auxiliaire de connexion 9 comporte une plaque avant 10a et une plaque arrière 10b. La plaque avant 10a est fixée à la plaque arrière 10b par l'intermédiaire des moyens de guidage 14. Ces moyens de guidage consistent en une paire de tiges de guidage référencées 14 et fixées parallèlement l'une à l'autre sur, d'une part, la plaque avant du bâti et, d'autre part, la plaque arrière de ce bâti.

De façon avantageuse, la plaque avant 10a du bâti 10 comporte une ouverture permettant d'emboîter l'ensemble de l'auxiliaire de connexion 9 sur les saignées de l'embase 6, la plupart des embases utilisées couramment dans les milieux hostiles comportant de telles saignées.

La plaque arrière 10b comporte également une ouverture qui permet, quant à elle, le passage du câble de la fiche maintenue dans l'auxiliaire de connexion 9. Cette fiche 5 de connecteur n'a cependant pas été représentée sur cette figure 2, par mesure de simplification de la figure.

Les moyens d'accrochage cités précédemment comportent, d'une part, des premiers moyens de pince 18 pour accrocher la fiche du connecteur et la maintenir dans une position fixe, et, d'autre part, des seconds moyens de pince 24 pour libérer ladite fiche de connecteur des premiers moyens de pince 18.

De façon plus précise, les premiers moyens de pince 18 comportent deux plaques mobiles 18c dont les extrémités inférieures 18d sont incurvées l'une vers l'autre de façon à pouvoir soutenir la fiche de connecteur lorsque celle-ci a été saisie par lesdits premiers moyens de pince 18. A leurs extrémités supérieures, ces plaques mobiles 18c sont reliées l'une à l'autre par un ressort 18b ayant pour but de tenir écartées les extrémités supérieures des plaques mobiles de façon à rapprocher les extrémités inférieures incurvées 18d de ces plaques mobiles 18c.

Les moyens de translation cités ci-dessus comportent une paire de coulisseaux 16 positionnés chacun autour de l'une des tiges de guidage 14. Ces coulisseaux 16 sont aptes à coulisser sur lesdites tiges de guidage 14.

Les premiers moyens de pince, décrits précédemment, comportent en outre des moyens de maintien 18a appelés également griffes 18a. Ces griffes 18a sont au nombre de deux. Chacune de ces griffes 18a est fixée par son extrémité supérieure sur l'une des plaques mobiles 18c et repose en appui sur l'un des coulisseau 16. Ces griffes 18a permettent, d'une part, de maintenir les premiers moyens de pince 18 en appui sur les coulisseaux 16 et, d'autre part, de permettre un mouvement de rotation des plaques mobiles autour de ces dits coulisseaux.

Les moyens de translation, en partie décrits précédemment, comportent de plus des moyens d'entretoise 20 disposés en partie autour des premiers moyens de pince 18. Ces moyens d'entretoise 20 sont solidaires des coulisseaux 16. Ainsi, lorsque ces moyens d'entretoise subissent un déplacement, les premiers moyens de pince 18 sont entraînés dans ce déplacement.

Ces moyens d'entretoise 20 comportent deux plaques 20a et 20b en forme de U renversé reliées par deux plaques rigides 20c et 20d permettant de rigidifier lesdits moyens d'entretoise. Ces plaques rigides 20c et 20d comportent chacune une entaille dans laquelle vient se placer la partie incurvée 18d des premiers moyens de pince 18 lorsque lesdits premiers moyens de pince sont en position de saisie de la fiche de connecteur, les plaques mobiles 18c étant posées contre les plaques rigides 20c et 20d. En outre, les parties saillantes qui entourent l'entaille des plaques rigides 20c et 20d assurent un guidage de la fiche de connecteur vers l'intérieur des premiers moyens de pince 18 lorsque l'opérateur veut introduire la fiche dans l'auxiliaire de connexion.

Pour être solidaires des coulisseaux 16, les moyens d'entretoise sont fixés sur les coulisseaux par les jambes des plaques 20a et 20b en U. Les plaques rigides 20c et 20d sont fixées sur les plaques 20a et 20b entre les deux coulisseaux 16.

Un système de levier 12 est associé aux moyens d'entretoise 20 et au coulisseau 16 pour former les moyens de translation. Ces moyens de translation comportent, en outre, un ensemble de biellettes 22.

Le système de levier 12 comporte une rampe de levier 12b fixée, d'une part, sur le côté supérieur de la plaque arrière 10b du bâti et, d'autre part, sur le côté supérieur de la plaque avant 10a du bâti. Cette rampe de levier 12b est plus large côté plaque arrière 10b que côté plaque avant 10a. De cette façon, quand le moyen de translation 20 se trouve situé dans la partie large de la rampe de levier 12b, les parties supérieures des deux plaques mobiles 18c ne peuvent être rapprochées suffisamment et la fiche 5 reste prisonnière des premiers moyens de pince 18, quelles que soient les tractions que peuvent exercer la fiche 5 et son câble électrique sur l'auxiliaire de connexion 9. Au contraire, quand le moyen de translation 20 se trouve situé dans la partie étroite de la rampe de levier 12b, les parties supérieures des deux plaques mobiles 18c peuvent être rapprochées :
- soit par action d'écartement des extrémités inférieures 18d incurvées des deux plaques mobiles 18c, en introduisant ou en retirant la fiche 5 en force,
- soit par action de rapprochement des parties supérieures des plaques 18c grâce à la hotte de préhension active 24 qui sera décrite plus loin.

Le système de levier 12 comporte, de plus, une tige 12a faisant levier à l'intérieur de la rampe de levier 12b. Cette tige 12a (ou levier 12a) est fixée par l'une de ses extrémités à une biellette 22b de l'ensemble de biellettes 22. Une autre biellette 22c de cet ensemble de biellettes 22 est fixée sur la face 20a des moyens d'entretoise de façon à ce que, lorsque l'on agit sur le levier 12a, l'ensemble constitué des moyens d'entretoise 20, des premiers moyens de pince 18 et des coulisseaux 16 se translate en fonction de la position du levier 12a.

Sur cette figure 2, le levier 12a a été représentée dans une position intermédiaire PI, c'est-à-dire dans une position où l'ensemble constitué des moyens d'entretoise, des premiers moyens de pince et des coulisseaux se trouvent à mi-chemin entre la position initiale dans laquelle les premiers moyens de pince 18 sont aptes à saisir la fiche de connecteur et la position finale dans laquelle la fiche de connecteur est introduite dans l'embase.

Les moyens d'accrochage, en partie décrits précédemment, comportent des seconds moyens de pince 24 appelés également hotte de préhension active. Cette hotte de préhension active 24 comporte une armature fixe 24a, 24b. Plus précisément, cette armature fixe comprend une armature centrale 24a en forme de T et des plaques fixes 24b disposés contre les faces avant et arrière de l'armature 24a en T. Ces plaques fixes 24b font de cette armature fixe une structure rigide et relativement classique.

La hotte de préhension active 24 comporte également des éléments mobiles, notamment des lames 24c disposées de chaque côté de la barre centrale 24f du T formant l'armature centrale 24a. Entre cette barre centrale 24f et les lames 24c sont disposées des lames de ressort 24d. Ces lames de ressort 24d ont pour rôle de tenir les lames 24c écartées de la barre centrale 24f. De plus, un talon 24e est fixé sur chacune des lames 24c. Ce talon, en forme d'équerre, est fixé par une extrémité sur la lame 24c, l'autre extrémité restant libre, dirigée vers la tige de guidage 14. Ce talon permet, lorsque les lames 24c sont écartées par rapport à la barre centrale 24f, le passage des plaques mobiles 18c des premiers moyens de pince 18. Au contraire, lorsque les lames 24c sont rapprochées de la barre centrale 24f (c'est-à-dire lorsque le télémanipulateur appuie sur la hotte de préhension active), les talons 24e pressent les plaques mobiles 18c dont les parties incurvées 18d s'écartent l'une par rapport à l'autre de façon à ce que la fiche maintenue dans ces premiers moyens de pince 18 soit libérée.

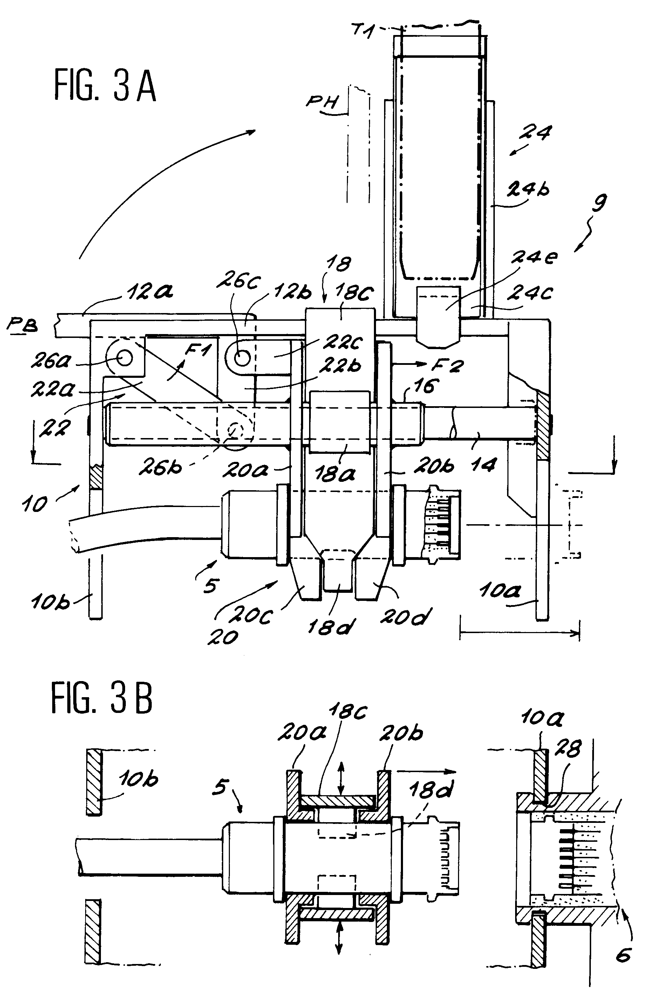

Sur les figures 3A et 3B, on a représenté, respectivement, une vue de profil et une vue de dessus de l'auxiliaire de connexion lors de la saisie de la fiche de connecteur.

La figure 3A montre donc l'auxiliaire de connexion lorsque le levier 12a est dans une position basse référencée PB. On voit, sur cette figure, l'ensemble de biellettes 22 constitué de trois biellettes 22a, 22b, 22c. La biellette 22c est fixée, par l'une de ses extrémités, à la plaque 22a des moyens d'entretoise et comporte, à son autre extrémité, une articulation 26c avec la biellette 22b. Cette biellette 22b comporte, à l'une de ses extrémités, une articulation 26b commune avec la biellette 22a. L'extrémité opposée à cette articulation 26b est fixée au levier 12a. La biellette 22a comporte en outre une articulation référencée 26a avec la plaque arrière 10b du bâti 10. Ainsi, lorsque le levier 12a est en position basse PB, la biellette 22b qui forme un angle droit avec le levier 12a est dans sa position verticale. Au contraire, lorsque le levier 12a est levé, c'est-à-dire lorsqu'il est dans sa position haute PH représentée par des traits mixtes sur la figure 3A, les biellettes 22a, 22b et 22c se placent dans le prolongement respectif l'une de l'autre de façon à entraîner un déplacement des moyens d'entretoise et, par conséquent, des premiers moyens de pince 18 et du coulisseau 16.

Le déplacement des biellettes se fait selon la flèche F1. Le déplacement des moyens d'entretopise s'effectue dans le sens de la flèche F2 représentée sur la figure 3A.

Lorsque le levier 12a est dans sa position haute PH, la plaque mobile 18c des moyens de pince 18 vient se placer sous le talon 24e de la hotte de préhension active 24. De façon plus précise, lorsque le levier 12a est en position PH, les plaques mobiles 18c sont placées entre les lames 24c et les talons 24e respectifs. Les lames 24c étant alors écartées de armature centrale 24a sous l'effet des lames de ressort 24d, les talons 24e laissent les plaques mobiles 18c dans leur position de maintien de la prise de connecteurs, c'est-à-dire dans la position où les extrémités incurvées 18d des plaques mobiles 18c sont rapprochées l'une de l'autre grâce au ressort 18b. Lorsque le levier 12a a atteint cette position haute PH, la fiche de connecteur 5 est introduite dans son embase respective 6.

Lorsque la fiche de connecteur 5 est introduite dans son embase 6, un télémanipulateur T1, représenté en traits mixtes sur la figure, appuie sur les lames 24c de ladite hotte de préhension active 24 de façon à resserrer ces lames 24c, afin que les talons 24e appuient sur les extrémités supérieures des plaques mobiles 18c. De cette façon, les parties incurvées 18d des plaques mobiles 18c s'écartent et la fiche de connecteur 5 est libérée hors de l'auxiliaire de connexion 9. La fiche de connecteur 5 et l'embase 6 sont connectés.

Sur cette figure 3A, on a représenté la position du levier 12a, du coulisseau 16, de la fiche de connecteur 5 prisonnière de l'auxiliaire de connexion 9 et du télémanipulateur T1 au moment où ce télémanipulateur T1 utilise la hotte de préhension active pour positionner l'auxiliaire de connexion 9 sur les saignées 28 de l'embase 6.

Sur la figure 3B, on a représenté l'auxiliaire de connexion selon une vue de dessus. Cette figure montre donc la fiche de connexion 5, ainsi que les moyens d'entretoises 20a-20d vus de dessus. Elle montre également les plaques mobiles 18c de part et d'autre de la fiche de connecteur 5 et l'extrémité incurvée 18d de ces plaques mobiles 18c. Cette figure 3B montre également la plaque avant 10a introduite dans les saignées 28 de l'embase 6 du connecteur.

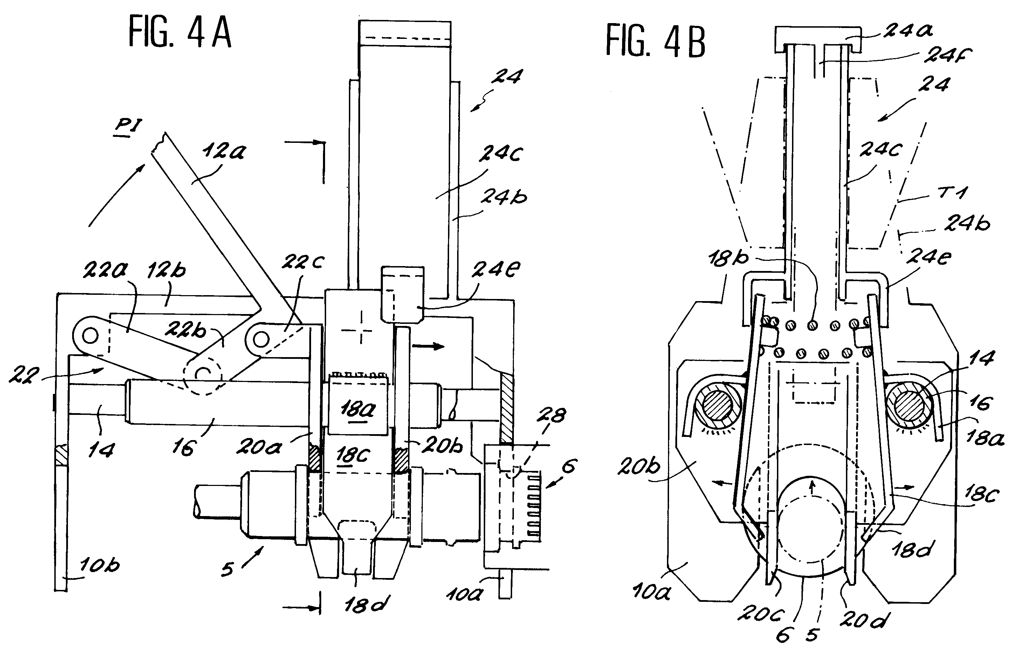

Sur les figures 4A et 4B, on a représenté, respectivement une vue de profil et une vue de face de l'auxiliaire de connexion selon l'invention.

La figure 4A montre, vu de profil, l'auxiliaire de connexion 9 telle que représentée sur la figure 3A. Cette figure 4A montre l'état de l'auxiliaire de connexion 9 lorsque le levier 12a est dans une position intermédiaire PI, c'est-à-dire dans une position ni basse ni haute. Dans cette position PI, la plaque avant 10a a été installée dans les saignées 28 de l'embase 6 et le levier 12a est incliné selon un angle d'environ 45 degrés par rapport à la rampe de levier 12b. Les biellettes 22a, 22b et 22c sont également dans une position intermédiaire, c'est-à-dire dans une position où les biellettes 22a et 22b forment un angle d'environ 135 degrés. L'ensemble constitué des moyens d'entretoise 20, des moyens de pince 18 et du coulisseau 16 sont en cours de translation vers l'embase 6. Les plaques mobiles 18c des moyens de pince 18 sont en partie introduits sous les talons 24e de la hotte de préhension active 24.

La figure 4B montre l'auxiliaire de connexion vu de face dans une position dite finale, c'es-à-dire dans la position où la fiche de connecteur 5 est en cours de libération.

Cette figure montre donc la hotte de préhension active 24 avec son armature centrale 24a et les lames 24c pressées contre l'armature 24a par le télémanipulateur T1 représenté en traits mixtes. Les talons 24e de cette hotte de préhension active 24 sont donc en position rapprochée l'un vers l'autre de façon à appuyer sur l'extrémité supérieure des plaques mobiles 18c. Cette pression sur les plaques mobiles 18c compresse le ressort 18b et a pour effet d'écarter les extrémités incurvées 18d des plaques mobiles. Dans cette position les griffes 18a des moyens de pince 18 ont subi une rotation autour des coulisseaux 16 de façon à permettre l'écartement desdites extrémités incurvées 18d.

Cette figure 4B montre en traits mixtes la fiche 5 introduite dans l'embase 6. Elle montre également la plaque avant 10a dont l'ouverture est introduite dans les saignées 28 de l'embase 6. Cette ouverture de la plaque avant 10a est représentée sur la figure en pointillés. Sur cette figure, sont également représentés les moyens d'entretoise 20a, 20b, 20c et 20d. Les plaques fixes 24b sont représentées en pointillé pour ne pas surcharger le dessin.

Sur les figures décrites précédemment, on a représenté l'auxiliaire de connexion dans ses différentes positions lors de la connexion de la fiche 5 sur l'embase 6. Cependant, comme cela a déjà été expliqué, cet auxiliaire de connexion permet également de déconnecter la fiche 5 de son embase 6.

On comprendra, bien sûr, que pour déconnecter la fiche 5 de l'embase 6, il faut réaliser les étapes décrites précédemment dans le cas d'une connexion, dans un ordre opposé. Ainsi, pour déconnecter la fiche 5 de l'embase 6, il faut placer, à l'aide de la pince du télémanipulateur, le levier 12a en position haute (pour permettre l'écartement des extrémités inférieures 18d incurvées des deux plaques mobiles 18c), puis amener l'auxiliaire de connexion 9, tenu en pince par la hotte de préhension active 24, au-dessus du connecteur et notamment au-dessus de la fiche 5. L'auxiliaire de connexion est alors abaissé sur le connecteur de façon à ce que la plaque avant 10a s'intègre dans les saignées de l'embase 6 tandis que le télémanipulateur T1 appuie sur les lames 24c de la hotte de préhension active 24 pour ouvrir les moyens de pince 18 qui peuvent alors venir se placer autour de la fiche 5. Lorsque le télémanipulateur T1 lache l'appui qu'il a contre les lames 24c de la hotte de préhension, les extrémités incurvées 18d des moyens de pince 18 viennent enserrer la fiche 5 par le bas. Le télémanipulateur peut alors venir abaisser le levier 12a de façon à déverrouiller la fiche 5 et à provoquer son recul par rapport à l'embase 6. Lorsque le levier 12a est complètement abaissé, la fiche 5 est extraite de l'embase 6. La fiche 5 est alors prisonnière de l'auxiliaire de connexion 9.

Un télémanipulateur peut alors soulever l'ensemble constitué de l'auxiliaire de connexion 9 et de la fiche 5 grâce à la hotte de préhension active 24, de façon à extraire la plaque avant 10a hors de la saignée 28 de l'embase 6. Le même télémanipulateur ou un deuxième appareil peut alors remettre le levier 12a en position haute, ce qui permet alors de libérer la fiche 5 par rapprochement des parties supérieures des plaques mobiles 18c des moyens de pince 18 :
- soit en forçant la libération de la fiche 5 qui écartera les extrémités inférieures 18d incurvées des deux plaques mobiles 18c,
- soit en pressant les lames 24c qui rapprocheront les talons 24e de la hotte de préhension active 24, rapprochant de ce fait les parties supérieures des plaques mobiles 18c.

L'auxiliaire de connexion peut alors être utilisé pour connecter ou déconnecter une autre fiche et son embase.

## Revendications

1. Dispositif pour connecter et déconnecter, par télémanipulation, une fiche de connecteur et son embase, caractérisé en ce qu'il comporte :
- des moyens d'accrochage (18,24) pour saisir la fiche du connecteur ;
- des moyens de translation (16, 20, 22) pour mouvoir la fiche de connecteur maintenue par les moyens d'accrochage ;
- des moyens de guidage (14) pour diriger le mouvement de la fiche du connecteur vers/hors de l'embase ; et
- un bâti (10) apte à supporter les moyens d'accrochage ainsi que les moyens de translation et comprenant une plaque avant (10a) et une plaque arrière (10b) parallèles l'une à l'autre et reliées par les moyens de guidage.

2. Dispositif selon la revendication 1, caractérisé en ce que les moyens de guidage (14) comportent une paire de tiges de guidage fixées, parallèlement l'une à l'autre, d'une part sur la plaque avant du bâti et d'autre part sur la plaque arrière du bâti.

3. Dispositif selon l'une quelconque des revendications 1 et 2, caractérisé en ce que les moyens d'accrochage comportent des premiers moyens de pince (18) pour accrocher la fiche de connecteur et la maintenir dans une position fixe, et des seconds moyens de pince (24) pour libérer ladite fiche de connecteur des premiers moyens de pince.

4. Dispositif selon l'une quelconque des revendications 2 et 3, caractérisé en ce que les moyens de translation comportent une paire de moyens coulissants (16) positionnés chacun autour d'une tige de guidage et aptes à coulisser sur lesdites tiges de guidage.

5. Dispositif selon la revendication 4, caractérisé en ce que les premiers moyens de pince comportent deux plaques mobiles (18c) dont les extrémités inférieures (18d) sont incurvées l'une vers l'autre pour soutenir la fiche de connecteur et dont les extrémités supérieures sont reliées par un moyen de ressort (18b) apte à tenir écartées les extrémités supérieures des plaques mobiles pour rapprocher les extrémités incurvées des plaques mobiles.

6. Dispositif selon la revendication 5, caractérisé en ce que les premiers moyens de pince peuvent comporter, sur chacune des plaques mobiles, un moyen de maintien (18a) apte à maintenir lesdits premiers moyens de pince en appui sur les moyens coulissants et à permettre un mouvement de rotation des plaques mobiles autour desdits moyens coulissants.

7. Dispositif selon l'une quelconque des revendications 4 à 6, caractérisé en ce que les moyens de translation comportent des moyens d'entretoise (20a-20d) disposés en partie autour des premiers moyens de pince, ces moyens d'entretoise étant solidaires des moyens coulissants.

8. Dispositif selon la revendication 7, caractérisé en ce que les moyens de translation peuvent comporter un ensemble de biellettes (22) et un système de levier (12) qui comprend un bras de levier (12a) fixé à l'une des biellettes, une autre biellette de cet ensemble étant fixée aux moyens d'entretoise.

9. Dispositif selon les revendications 5 et 8, caractérisé en ce que le système de levier comporte une rampe de levier (12b) à l'intérieur de laquelle évolue le bras de levier et qui comprend une partie large et une partie étroite aptes à interdire (ou autoriser) le rapprochement des extrémités supérieures des plaques mobiles, donc l'éloignement des extrémités inférieures desdites plaques mobiles, pour permettre le maintien (ou la libération) de la fiche de connecteur dans (ou hors de) les premiers moyens de pince.

10. Dispositif selon l'une quelconque des revendications 1 à 8, caractérisé en ce que la plaque avant du bâti comprend une ouverture apte à s'emboîter dans d es saignées de l'embase pour assurer un positionnement fixe des moyens d'accrochage par rapport à l'embase.

11. Dispositif selon l'une quelconque des revendications 3 à 10, caractérisé en ce que les seconds moyens de pince, installés à proximité de la plaque avant du bâti, comportent une armature centrale (24a) en forme de T, une paire de lames de serrage (24c) situées de part et d'autre de l'armature centrale et une paire de moyens de ressort (24d) disposés chacun entre ladite armature centrale et l'une des lames de serrage.

12. Dispositif selon la revendication 11, caractérisé en ce que chacune des lames de serrage comportent un moyen d'appui (24e) apte à appuyer sur les extrémités supérieures des plaques mobiles des premiers moyens de pince pour permettre l'écartement des extrémités incurvées des plaques mobiles des premiers moyens de pince.

13. Dispositif selon l'une quelconque des revendications 1 à 12, caractérisé en ce que la plaque arrière du bâti comporte une ouverture apte à recevoir un câble électrique dont l'extrémité est introduite dans la fiche de connecteur.
